# EUROPÄISCHE PATENTSCHRIFT

(11) **EP 2 552 748 B1**
(45) Veröffentlichungstag und Bekanntmachung des Hinweises auf die Patenterteilung: **22.10.2014**
(21) Anmeldenummer: 11709008.4
(22) Anmeldetag: 08.03.2011
(51) Int. Cl.: B60R 1/00

(54) **KAMERAANORDNUNG FÜR EIN FAHRZEUG**
CAMERA ARRANGEMENT FOR A VEHICLE
ENSEMBLE CAMÉRA DESTINÉ À UN VÉHICULE

(30) Priorität: 30.03.2010 DE 102010013338
(43) Veröffentlichungstag der Anmeldung: 06.02.2013
(73) Patentinhaber: Daimler AG, 70327 Stuttgart (DE)
(72) Erfinder: HAHNER, Martin, 71067 Sindelfingen (DE); MOCZYGEMBA, Jürgen, 72764 Reutlingen (DE); SCHEURENBRAND, Roland, 71126 Gäufelden (DE); WEIKERT, Günther, 71134 Aidlingen (DE)
(74) Vertreter: JENSEN & SON
(86) Internationale Anmeldenummer: PCT/EP2011/001117
(87) Internationale Veröffentlichungsnummer: WO 2011/120623

(56) Entgegenhaltungen:
- EP-A1- 1 190 907
- WO-A2-2004/012962
- DE-A1- 10 204 764
- DE-A1-102006 039 192
- JP-A- 11 334 471
- JP-A- 2001 058 543

## Beschreibung

Die Erfindung betrifft eine Kameraanordnung für ein Fahrzeug, umfassend zumindest eine Kamera mit einer Schutzabdeckung, wobei die Kamera zwischen einer Ausgangsstellung und einer Betriebsstellung um eine Schwenkachse schwenkbar ist, wobei die Schwenkachse derart angeordnet ist, dass die Kameraanordnung ausschließlich nach außen schwenkbar ist.

Aus der EP 1 529 688 B1 ist eine Kameraanordnung für Fahrzeuge mit einer Kameraeinheit zur Bilderfassung bekannt. Die Kameraeinheit ist in einer nicht aktiven Position von außen im Wesentlichen unzugänglich hinter einem schwenkbaren Schutzelement zum Schutz vor Schmutz und/oder Feuchtigkeit angeordnet. Die Kameraeinheit ist auf dem Schutzelement angeordnet, wobei dieses schwenkbar ist und das Schutzelement mit der darauf angeordneten Kameraeinheit aus der die Kameraeinheit verdeckenden Stellung, in der die Kameraeinheit sich in der nicht aktiven Position befindet, in eine Stellung schwenkbar ist, in der die Kameraeinheit sich in der aktiven Position zur Bilderfassung befindet. Das Schutzelement ist als Schutzdeckel ausgebildet, der in der die Kameraeinheit verdeckenden Stellung eine Öffnung in einer Fahrzeugaußenhaut zumindest fast vollständig verschließt. Eine Schwenkachse ist horizontal und möglichst nah zur Mittellinie des Schutzelementes an dessen Rückseite angeordnet.

Die gattungsgemäße EP 1 190 907 A1 eine in ein Kraftfahrzeug eingebaute Kamera, die an einer Aufbaustruktur unter Vermittlung einer Halteeinrichtung angeordnet ist. Die Kamera ist mittels der Halteeinrichtung aus einer in eine Wand der Aufbaustruktur versenkten Ruhestellung in eine ausgefahrene Betriebsstellung und vice versa verschwenkbar.

Weitere Kameraanordnungen für Fahrzeuge beschreiben die Druckschriften WO 2004/012962 A2, JP 11 334471 A, JP 2001 058543 A, DE 102 04 764 A1 und DE 10 2006 039 192 A1.

Der Erfindung liegt die Aufgabe zugrunde, eine gegenüber dem Stand der Technik verbesserte Kameraanordnung für ein Fahrzeug anzugeben.

Die Aufgabe wird erfindungsgemäß durch die in Anspruch 1 angegebenen Merkmale gelöst. Vorteilhafte Weiterbildungen der Erfindung sind Gegenstand der Unteransprüche.

Eine Kameraanordnung für ein Fahrzeug umfasst zumindest eine Kamera, welche eine an der Kamera befestigte Schutzabdeckung aufweist, wobei die Kamera und die Schutzabdeckung zwischen einer Ausgangsstellung und einer Betriebsstellung um eine in einem einem Objektiv der Kamera gegenüberliegenden Bereich der Kamera angeordnete Schwenkachse gemeinsam schwenkbar ist. Erfindungsgemäß ist die Schwenkachse derart angeordnet, dass die Kameraanordnung ausschließlich nach außen schwenkbar ist. Dabei ist die Schwenkachse mittels einer an der Kamera befestigten Welle gebildet, wobei ein Teilbereich einer Mantelfläche der Welle das dem Objektiv gegenüberliegende Ende der Kamera bildet. Ferner verläuft eine optische Achse der Kamera senkrecht zur Schwenkachse und in der Ausgangsstellung und Betriebsstellung parallel zu einer Innenseite der Schutzabdeckung.

Durch die erfindungsgemäße Anordnung der Schwenkachse ist die Kamera mit der Schutzabdeckung vollständig nach außen schwenkbar, also vom Fahrzeug weg, d. h., dass kein Teilbereich der Kamera und der Abdeckung beim Schwenken von der Ausgangsstellung in die Betriebsstellung nach innen geschwenkt wird. Dadurch kann eine Einbautiefe eines erforderlichen Bauraumes zur Anordnung der Kameraanordnung in vorteilhafter Weise reduziert werden.

Darüber hinaus ist die Kameraanordnung mittels der Schutzabdeckung zumindest in der Ausgangsstellung vor Umwelteinflüssen, wie z. B. Schmutz und/oder Wasser, geschützt.

Ausführungsbeispiele der Erfindung werden im Folgenden anhand von Zeichnungen näher erläutert.

Dabei zeigen:
- Fig. 1: schematisch eine Kameraanordnung für ein Fahrzeug in einer Ausgangsstellung, und
- Fig. 2: schematisch eine Kameraanordnung für ein Fahrzeug in einer Betriebsstellung.

Einander entsprechende Teile sind in allen Figuren mit den gleichen Bezugszeichen versehen.

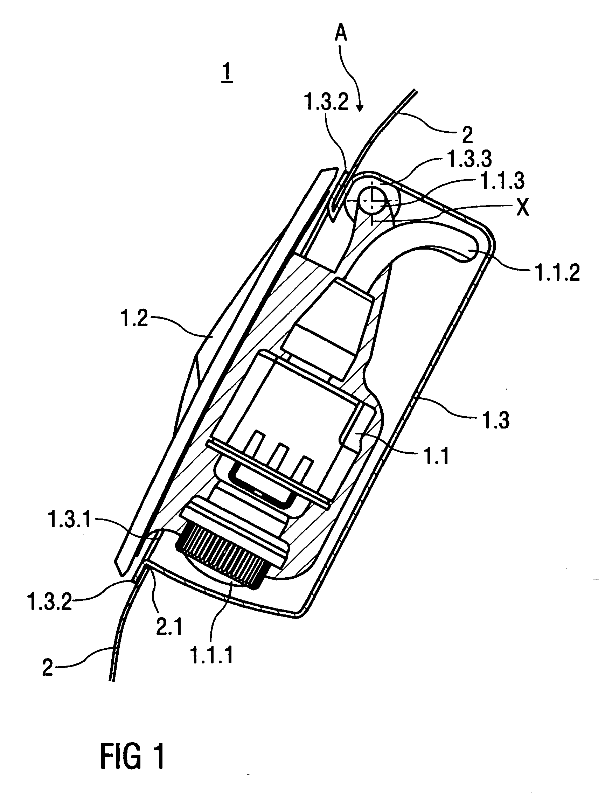

In der Figur 1 ist eine Kameraanordnung 1 für ein nicht näher dargestelltes Fahrzeug mit zumindest einer Kamera 1.1 in einer Ausgangsstellung A dargestellt. Bei der Kamera 1.1 handelt es sich um eine Rückfahrkamera des Fahrzeuges, wobei die Kamera 1.1 an dessen Heckbereich angeordnet ist.

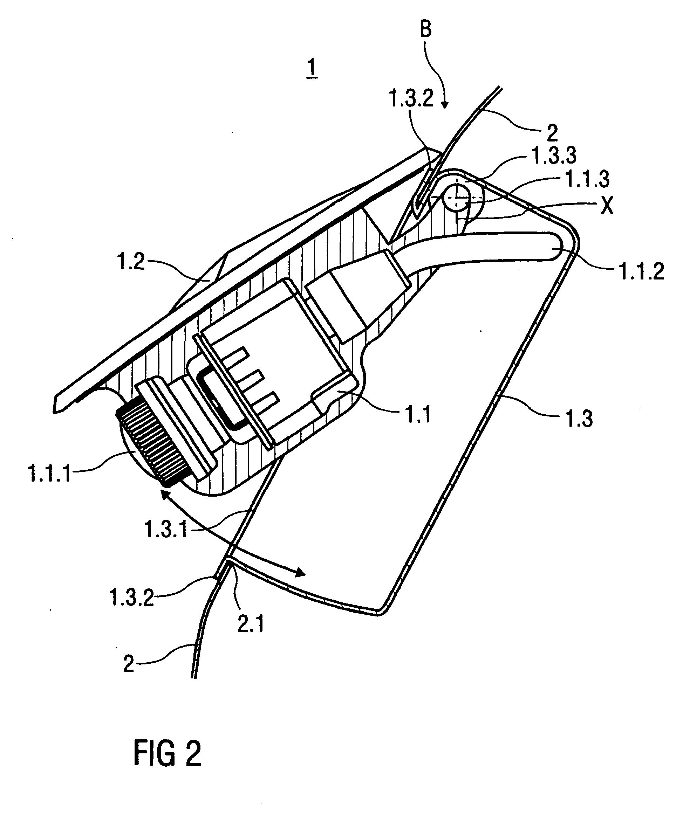

In der Ausgangsstellung A ist die Kamera 1.1 in einem Gehäuse 1.3 angeordnet, welches in einer Öffnung 2.1 eines Karosseriebleches 2 des Fahrzeuges angeordnet ist. Eine Gehäuseöffnung 1.3.1 ist mittels einer Schutzabdeckung 1.2, die an der Kamera 1.1 angeordnet ist, abdeckbar, wobei die Schutzabdeckung 1.2 in dem vorliegenden Ausführungsbeispiel gemäß Figur 1 in einem nicht vollständig geschlossenen Zustand gezeigt ist. Die Kamera 1.1 ist mit der an dieser angeordneten Schutzabdeckung 1.2 von der Ausgangsstellung A um eine Schwenkachse X in eine in Figur 2 gezeigte Betriebsstellung B schwenkbar. Mittels der Schutzabdeckung 1.2 ist die Kamera 1.1 zumindest in der Ausgangsstellung A in vorteilhafter Weise weitestgehend vor Schmutz und/oder Nässe geschützt.

In dem vorliegenden Ausführungsbeispiel gemäß Figur 1 ist ein Objektiv 1.1.1 der Kamera 1.1 nach unten zeigend angeordnet, wobei die Längsachse der Kamera 1.1 in der Ausgangsstellung A im Wesentlichen parallel zu dem Karosserieblech 2 des Fahrzeuges verläuft. Eine Stromversorgungsleitung 1.1.2 der Kamera 1.1 ist ebenfalls in dem Gehäuse 1.3 angeordnet, wobei die Stromversorgungsleitung 1.1.2 an der oberen Seite des Gehäuses 1.3, an der auch die Schwenkachse X angeordnet ist, durch das Gehäuse 1.3 geführt ist.

Das Gehäuse 1.3 ist in dem Karosserieblech 2, welche die Außenhaut des Fahrzeuges bildet, angeordnet, wobei das Karosserieblech 2, die oben beschriebene Öffnung 2.1 aufweist. Dabei entsprechen die Abmessungen der Öffnung 2.1 einer Breite sowie einer Höhe des Gehäuses 1.3. Das Gehäuse 1.3 ist derart in der Öffnung 2.1 des Karosseriebleches 2 angeordnet, dass dieses gegenüber Umwelteinflüssen, wie z. B. Regen, dicht ausgeführt ist. Dazu ist an dem Gehäuse 1.3 ein kragenförmiger Randbereich 1.3.2 ausgebildet, der die Öffnung 2.1 im Karosserieblech 2 umläuft, wodurch die Öffnung 2.1 insbesondere gegenüber eintretender Nässe und/oder Schmutz abgedichtet ist. Alternativ ist es möglich, zwischen dem kragenförmigen Randbereich 1.3.2 und dem Karosserieblech 2 z. B. ein Dichtelement anzuordnen.

Das Gehäuse 1.3 ist aus einem Kunststoff gebildet, alternativ kann dieses auch aus einem anderen geeigneten Material gebildet sein.

In der Ausgangsstellung A der Kamera 1.1 verdeckt die Schutzabdeckung 1.2 die Gehäuseöffnung 1.3.1, wobei die Schutzabdeckung 1.2 im geschlossenen Zustand, d. h. in der Ausgangsstellung A der Kamera 1.1, um eine Dicke der Schutzabdeckung 1.2 von dem Karosserieblech 2 abragt. Die Außenseite der Schutzabdeckung 1.2 ist mit einem Markenzeichen des Herstellers des Fahrzeuges versehen.

In der Ausgangsstellung A liegt die Schutzabdeckung 1.2 an dem Randbereich 1.3.2 des Gehäuses 1.3, diesen vollständig umlaufend und damit formschlüssig an, wobei zwischen dem kragenförmigen Randbereich 1.3.2 und der Schutzabdeckung 1.2 keine zusätzlichen Dichtelemente angeordnet sind. Somit ist die in dem Gehäuse 1.3 angeordnete Kamera 1.1 in der Ausgangsstellung A vor einem Wasser- und/oder Schmutzeintrag geschützt. Alternativ kann eine Dichtung vorgesehen sein, die entweder an der Kamera 1.1 oder an der Schutzabdeckung 1.2 befestigt ist.

Die Schutzabdeckung 1.2 ist an der Kamera 1.1 kraft- und formschlüssig lösbar befestigt. Dazu ist die Schutzabdeckung 1.2 mittels nicht gezeigter Verbindungselemente in Form von Schrauben an die Kamera 1.1 geschraubt. Somit sind die Kamera 1.1 und die Schutzabdeckung 1.2 als eine Baugruppe zusammengefasst. Alternativ oder zusätzlich kann die Schutzabdeckung 1.2 auch mittels einer Rastverbindung an der Kamera 1.1 befestigt sein.

Dadurch, dass die Schutzabdeckung 1.2 lösbar an der Kamera 1.1 befestigt ist, kann diese von der Kamera 1.1 entfernt werden, wodurch es möglich ist, die Kamera 1.1 zugänglich zu machen und ohne großen Aufwand aus dem Gehäuse 1.3 auszubauen. Auch ist es möglich, die Kamera 1.1 gemeinsam mit dem Gehäuse 1.3 aus der Öffnung 2.1 des Karosseriebleches 2 zu entfernen.

Um die Einbautiefe der Kameraanordnung 1 zu verringern, ist die Schwenkachse X zum Verschwenken der Kamera 1.1 erfindungsgemäß an der dem Objektiv 1.1.1 der Kamera 1.1 gegenüberliegenden Seite angeordnet. Hierzu ist an der Kamera 1.1 eine Welle 1.1.3 horizontal angeordnet, die drehbar in Lageraufnahmen 1.3.3, die im Gehäuse 1.3 angeordnet sind, gelagert ist. An einem Ende der Welle 1.1.3, die die Schwenkachse X definiert, ist eine nicht näher dargestellte elektrische Antriebseinheit angeordnet, mittels der die Welle 1.1.3 drehbar ist.

An der Kamera 1.1 ist die Welle 1.3.3 fest angeordnet, so dass die Kamera 1.1 mit der an dieser befestigten Schutzabdeckung 1.2 bei Drehung der Welle 1.3.3 schwenkt.

Die Kamera 1.1 ist mittels der elektrischen Antriebseinheit bei Einlegen eines Rückwärtsganges automatisch in die Betriebsstellung B schwenkbar. Alternativ oder zusätzlich kann ein nicht näher dargestelltes Bedienelement vorgesehen sein, bei dessen Betätigung die Kamera 1.1 in die Betriebsstellung B und zurück in die Ausgangstellung A schwenkbar ist.

In der Figur 2 ist die Kameraanordnung 1 in der Betriebsstellung B gezeigt. Dabei ist die Kamera 1.1 in der Betriebsstellung B in Bezug auf deren Längsachse um etwa 30° zu der Ausgangsstellung A verschwenkt. Durch die Schwenkbewegung der Kamera 1.1 schwenkt die Schutzabdeckung 1.2, so dass die Gehäuseöffnung 1.3.1 nicht mehr verdeckt ist. Die Kamera 1.1 schwenkt vollständig aus dem Gehäuse 1.3 heraus, wobei auch nicht ein Teilbereich der Kamera 1.1 und der Schutzabdeckung 1.2 beim Schwenken von der Ausgangsstellung A in die Betriebsstellung B in das Gehäuse 1.3 geschwenkt wird.

In der Betriebsstellung B liegt ein Erfassungsbereich der Kamera 1.1 außerhalb des Karosseriebleches 2. Dadurch kann in besonders vorteilhafter Weise eine nicht näher dargestellte im Heckbereich des Fahrzeuges angeordnete Stoßfängereinheit erfasst werden.

Weiterhin ist vorgesehen, dass ein Verschwenken der Kamera 1.1 mit an dieser befestigten Schutzabdeckung 1.2 von der Ausgangsstellung A in die Betriebsstellung B begrenzt ist. Die elektrische Antriebseinheit wird automatisch deaktiviert, sofern eine elektrische Energie der elektrischen Antriebseinheit einen Schwellwert überschreitet, wenn die Betriebsstellung B erreicht ist. Lässt sich die Kamera 1.1 mit der an dieser angeordneten Schutzabdeckung 1.2 aufgrund von Witterungseinflüssen, wie z. B. Eis, nicht verschwenken, wird die elektrische Antriebseinheit ebenfalls automatisch deaktiviert. Dadurch ist eine Beschädigung der Kameraanordnung 1 sowie der elektrischen Antriebseinheit weitestgehend vermieden.

Alternativ oder zusätzlich kann vorgesehen sein, dass die elektrische Antriebseinheit derart steuerbar ist, dass ein Weg der Schwenkbewegung vorgebbar ist, d. h., dass ein Winkel zwischen der Ausgangsstellung A und der Betriebsstellung B der Kamera 1.1 variabel einstellbar ist.

In einer vorteilhaften Ausführungsform der Kameraanordnung 1, die in dem Ausführungsbeispiel gemäß den Figuren 1 und 2 nicht gezeigt ist, verläuft die Stromversorgungsleitung 1.1.2 durch die Welle 1.1.3, die die Schwenkachse X definiert, und/oder durch eine Lageraufnahme 1.3.3.

In einer weiteren Ausführungsform der Kameraanordnung 1 kann die Schwenkachse X auch im Bereich der Schutzabdeckung 1.2 angeordnet sein, so dass die Einbautiefe der Kameraanordnung 1 reduziert ist.

### Bezugszeichenliste

- 1: Kameraanordnung
- 1.1: Kamera
- 1.1.1: Objektiv
- 1.1.2: Stromversorgungsleitung
- 1.1.3: Welle
- 1.2: Schutzabdeckung
- 1.3: Gehäuse
- 1.3.1: Gehäuseöffnung
- 1.3.2: Randbereich
- 1.3.3: Lageraufnahme
- 2: Karosserieblech
- 2.1: Öffnung

- A: Ausgangsstellung
- B: Betriebsstellung
- X: Schwenkachse

## Patentansprüche

1. Kameraanordnung (1) für ein Fahrzeug, umfassend zumindest eine Kamera (1.1) mit einer an der Kamera (1.1) befestigten Schutzabdeckung (1.2), wobei die Kamera (1.1) und die Schutzabdeckung (1.2) zwischen einer Ausgangsstellung (A) und einer Betriebsstellung (B) um eine in einem einem Objektiv (1.1.1) der Kamera (1.1) gegenüberliegenden Bereich der Kamera (1.1) angeordnete Schwenkachse (X) gemeinsam schwenkbar sind,
**dadurch gekennzeichnet,**
- **dass** die Schwenkachse (X) derart angeordnet ist, dass die Kameraanordnung (1) ausschließlich nach außen schwenkbar ist, wobei die Schwenkachse (X) mittels einer an der Kamera (1.1) befestigten Welle (1.1.3) gebildet ist und ein Teilbereich einer Mantelfläche der Welle (1.1.3) das dem Objektiv (1.1.1) gegenüberliegende Ende der Kamera (1.1) bildet und
- **dass** eine optische Achse der Kamera (1.1) senkrecht zur Schwenkachse (X) und in der Ausgangsstellung (A) und Betriebsstellung (B) parallel zu einer Innenseite der Schutzabdeckung (1.2) verläuft.

2. Kameraanordnung (1) nach Anspruch 1,
**dadurch gekennzeichnet, dass** die Kamera (1.1) in der Ausgangsstellung (A) in einem Gehäuse (1.3) angeordnet ist.

3. Kameraanordnung (1) nach Anspruch 1 oder 2,
**dadurch gekennzeichnet, dass** die Kamera (1.1) schwenkbar in dem Gehäuse (1.3) gelagert ist.

4. Kameraanordnung (1) nach einem der vorhergehenden Ansprüche,
**dadurch gekennzeichnet, dass** an dem Gehäuse (1.3) und/oder der Schutzabdeckung (1.2) zumindest eine Dichtung zur Abdichtung der Schutzabdeckung (1.2) gegen das Gehäuse (1.3) in der Ausgangsstellung (A) ausgebildet ist.

## Claims

1. Camera arrangement (1) for a vehicle, comprising at least one camera (1.1) having a protective cover (1.2) fixed to the camera (1.1), wherein the camera (1.1) and the protective cover (1.2) can be pivoted together, between a starting position (A) and an operating position (B), about a pivot axis (X) arranged in a region of the camera (1.1) lying opposite an objective (1.1.1) of the camera (1.1),
**characterised in that**
- the pivot axis (X) is arranged in such a way that the camera arrangement (1) can be pivoted exclusively outwards, wherein the pivot axis (X) is formed by means of a shaft (1.1.3) fixed to the camera (1.1) and a sub-region of a shell surface of the shaft (1.1.3) forms the end of the camera (1.1) lying opposite the objective (1.1.1) and
- an optical axis of the camera (1.1) extends perpendicular to the pivot axis (X) and in the starting position (A) and operating position (B) parallel to an inner side of the protective cover (1.2).

2. Camera arrangement (1) according to claim 1,
**characterised in that** the camera (1.1) is arranged in the starting position (A) in a housing (1.3).

3. Camera arrangement (1) according to claim 1 or 2,
**characterised in that** the camera (1.1) is mounted so as to be pivotable in the housing (1.3).

4. Camera arrangement (1) according to one of the preceding claims,
**characterised in that** at least one seal is formed on the housing (1.3) and / or on the protective cover (1.2) for sealing the protective cover (1.2) with respect to the housing (1.3) in the starting position (A).

## Revendications

1. Ensemble (1) de caméra pour un véhicule, comprenant au moins une caméra (1.1) doté d'un couvercle de protection (1.2) fixé à la caméra, la caméra (1.1) et le couvercle de protection (1.2) pouvant pivoter conjointement entre une position de sortie (A) et une position de fonctionnement (B) autour d'un axe de pivotement (X) disposé dans la zone de caméra en regard d'un objectif (1.1.1) de la caméra (1.1) **caractérisé en ce que**
- l'axe de pivotement (X) est disposé de telle manière que l'ensemble de caméra (1) puisse pivoter uniquement vers l'extérieur, l'axe de pivotement (X) étant formé au moyen d'un arbre (1.1.3) fixé à la caméra (1.1) et une zone partielle d'une enveloppe de l'arbre (1.1.3) forme l'extrémité de la caméra (1.1) en regard de l'objectif (1.1.1) et
- un axe optique de la caméra (1.1) s'étend perpendiculairement à l'axe de pivotement (X) et dans la position de sortie (A) et la position de fonctionnement (B) parallèlement avec un côté interne du couvercle de protection (1.2).

2. Ensemble de caméra (1) selon la revendication 1, **caractérisé en ce que** la caméra (1.1) est disposé dans la position de sortie (A) dans un boîtier).

3. Ensemble de caméra (1) selon la revendication 1 ou la revendication 2, **caractérisé en ce que** la caméra (1.1) est disposée pivotante dans le boîtier (1.3).

4. Ensemble de caméra (1) selon l'une quelconque des revendications précédentes, **caractérisé en ce qu'**au moins un joint d'étanchéité destiné à étanchéifier le couvercle de protection (1.2) est formé sur le boîtier (1.3) et/ou sur le couvercle de protection (1.2) contre le boîtier (1.3) dans la position de sortie (A).
